# EUROPEAN PATENT APPLICATION

(11) **EP 4 432 529 A1**
(43) Date of publication of application: **18.09.2024**
(21) Application number: 21964082.8
(22) Date of filing: 12.11.2021
(51) Int. Cl.: H02K 11/30, H02P 27/00

(54) **ELECTRONIC CONTROL DEVICE AND ELECTRIC POWER STEERING DEVICE**

(71) Applicant: MITSUBISHI ELECTRIC CORPORATION, Chiyoda-ku Tokyo 100-8310 (JP)
(72) Inventor: AKIYAMA Shuzo, Tokyo 100-8310 (JP)
(74) Representative: Hoffmann Eitle
(86) International application number: PCT/JP2021/041681
(87) International publication number: WO 2023/084727

(57) **Abstract**

An electronic control device (1) includes a first power supply source circuit (11, 12) that is connected to a first ground (G1), and that generates a first voltage from an output voltage of a first external power supply source (PS1) with the first ground (G1) as a reference; a second power supply source circuit (13) that is connected to a second ground (G2) and that generates a second voltage from an output voltage of a second external power supply source (PS2) with the second ground (G2) as a reference; a first circuit (17) that is connected to the first ground (G1), and into which the first voltage is input; a second circuit ( 20) that is connected to the second ground (G2), and into which the second voltage is input, and an isolator circuit (21) that is provided between the first circuit and the second circuit, wherein the isolator circuit has: a first interface circuit that has the first voltage input thereto while being connected to the first ground, and is connected to the first circuit, and a second interface circuit that has the second voltage input thereto while being connected to the second ground, is connected to the second circuit, and is electrically isolated from the first interface circuit.

## Description

### [Technical Field]

The present disclosure relates to an electronic control device and an electric power steering device.

### [Background Art]

In an electronic control device that uses two different power supply sources, when a ground of one power supply source is in an open state, or when a potential difference is generated between grounds of the two power supply sources, there are cases when an operation malfunction occurs due to current intersection via the grounds. To prevent such an operation malfunction from occurring, there is a need to electrically isolate a circuit that operates by the first power supply source, and a circuit that operates by the other power supply source within the electronic control device.

In Patent Document 1, an example of conventional technology where a circuit within an electronic control device that uses two different power supply sources is electrically isolated is disclosed. Specifically, in the conventional technology disclosed in Patent Document 1, by providing a potential difference level shift circuit between a control calculation device that conducts control of a motor and switching elements that drive the motor, the control calculation device and the switching elements are electrically isolated.

### [Citation List]

### [Patent Document]

[Patent Document 1] Japanese Unexamined Patent Application, First Publication No. 2005-218256

### [Summary of Invention]

### [PROBLEM TO BE SOLVED BY THE INVENTION]

A size of a potential level shift circuit (high-voltage semiconductor integrated circuit) disclosed in Patent Document 1 above however, is relatively large. Thus, when a potential level shift circuit is used to electrically isolate the circuit within an electronic control device using two power supply sources, a number of parts and a mounting area (footprint) thereof increase, the device becomes larger, and a price thereof also increases.

The present disclosure has been made in order to address the problem above, and an object is to provide an electronic control device and electric power steering device where it is possible to effectively isolate circuits that operate by two different power supply sources, while achieving a smaller size and a lower cost thereof.

### [MEANS TO SOLVE THE PROBLEM]

To solve the problem above, an electronic control device according to an embodiment of the present disclosure uses a first external power supply source which is connected to a first ground, and uses a second external power supply source which is connected to a second ground, wherein the electronic control device includes: a first power supply source circuit that is connected to the first ground, and that generates a first voltage from an output voltage of the first external power supply source with the first ground as a reference; a second power supply source circuit that is connected to the second ground and that generates a second voltage from an output voltage of the second external power supply source with the second ground as a reference; a first circuit that is connected to the first ground, and into which the first voltage is input; a second circuit that is connected to the second ground, and into which the second voltage is input, and an isolator circuit that is provided between the first circuit and the second circuit, wherein the isolator circuit has a: a first interface circuit that has the first voltage input thereto while being connected to the first ground, and is connected to the first circuit, and a second interface circuit that has the second voltage input thereto while being connected to the second ground, is connected to the second circuit, and is electrically isolated from the first interface circuit.

An electric power steering device according to an embodiment of the present disclosure further includes: a torque sensor that detects a steering torque of steering; a motor that generates steering assist torque with respect to the steering, and the aforementioned electronic control device that controls a drive of the motor according to the steering torque detected by the torque sensor.

### [EFFECTS OF THE INVENTION]

The present disclosure has an effect of effectively isolating circuits that operate by two different power supply sources, while achieving a smaller size and a lower cost thereof.

### [Brief Description of Drawings]

[FIG. 1] A block diagram that shows a main part configuration of an electronic control device according to a first embodiment of the present disclosure.
[FIG. 2] A schematic drawing that shows an example of an inner configuration of a power supply source circuit included in the electronic control device according to the first embodiment.
[FIG. 3] A schematic drawing that shows an example of a first configuration of an isolator circuit in the first embodiment.
[FIG. 4] A schematic drawing that shows an example of a second configuration of an isolator circuit in the first embodiment.
[FIG. 5] A schematic drawing that shows an example of a third configuration of an isolator circuit in the first embodiment.
[FIG. 6] A block diagram that shows a main part configuration of an electronic control device according to a second embodiment of the present disclosure.

### [Description of Embodiments]

Details of an electronic control device and an electric power steering device according to embodiments of the present disclosure are explained below with reference to the drawings.

### <First Embodiment>

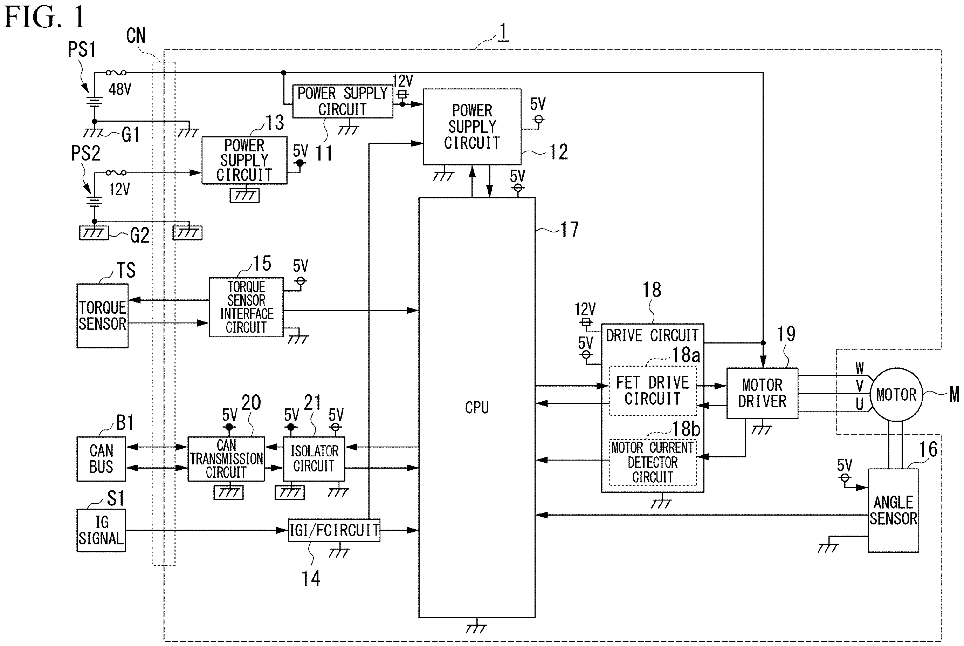

FIG. 1 is a block diagram that shows a main part configuration of an electronic control device according to a first embodiment of the present disclosure. A control unit 1 (electronic control device) shown in FIG. 1 is a control unit that is employed in an electric power steering device which applies a steering assist force to a steering mechanism of an automotive vehicle or the like. The electric power steering device typically configured from a torque sensor TS (external sensor), a motor M (actuator), and the control unit 1.

As shown in FIG. 1, the control unit 1 is operated by an electric output that is provided by an external power supply source PS1 (first external power supply source) and an external power supply source PS2 (second external power supply source). The control unit 1 is configured so as to operate when an ignition signal (IG signal) S1 is input to the control unit 1. The control unit 1 applies a steering assist force to a steering mechanism of an automotive vehicle or the like by controlling the motor M based on detected results of the torque sensor TS. The control unit 1 also conducts transmission via a CAN (Controller Area Network) bus B1.

The external power supply source PS1 and the external power supply source PS2 are direct current power sources that have mutually differing output voltages. For example, the external power supply source PS1 is a direct current power supply source having an output voltage of 48[V], and the external power supply source PS2 is a direct current power supply source having an output voltage of 12[V]. In other words, the external power supply source PS1 is a power supply source that exceeds 12V, and the external power supply source PS2 is a 12V system. The external power supplies PS1, PS2 are each connected to a different ground. The external power supply source PS1 is connected to a first ground G1, and the external power supply source PS2 is connected to a second ground G2. In FIG. 1, to facilitate understanding, the first ground G1 is shown with a typical ground symbol, whereas the second ground G2 is shown with a typical ground symbol enveloped by a square.

The torque sensor TS for example, is disposed in a vicinity of a steering not shown on the drawings, and detects steering torque of the vehicle operator. The motor M is mounted on a steering column or a rack shaft of the automotive vehicle, and under control of the control unit 1, generates a steering assist torque with respect to the steering. The motor M is for example, a three phase brushless motor configured from a U phase winding, a V phase winding, and a W phase winding. The motor M may also be a multiphase brushed motor having multiphase windings of three or more phases.

A CAN bus B1 is a transmission bus that is connected to various units provided in the automotive vehicle. The ignition signal S1 is for example, is a signal that is input into the control unit 1 when the vehicle operator operates an ignition key. The external power supplies PS1, PS2, the torque sensor TS, and the CAN bus B1 are connected to the control unit 1 via a connector CN. The ignition signal S1 is input to the control unit 1 via the connector CN.

The control unit 1 includes a power supply source circuit 11 (first power supply source circuit), a power supply source circuit 12 (first power supply source circuit), a power supply source circuit 13 (second power supply source circuit), an ignition interface (IG I/F) circuit 14, a torque sensor interface circuit 15 (sensor signal interface circuit), an angle sensor 16, a CPU (Central Processing Unit) 17 (first circuit, control circuit), a drive circuit 18, a motor drive 19, a CAN transmission circuit 20 (second circuit, peripheral circuit, transmission circuit), and an isolator circuit 21 (isolated circuit).

The power supply source circuit 11 is connected to the first ground G1, and generates a voltage from an output voltage of the external power supply source PS1, with the first ground G1 as the reference. The voltage that the power supply source circuit 11 generates is for example 12[V]. The power supply source circuit 12 is connected to the first ground G1, and generates a voltage (first voltage) from the voltage that the power supply source circuit 11 generates, with the first ground G1 as the reference. The voltage that the power supply source circuit 12 generates is for example 5[V]. When the ignition signal S1 is input via the ignition interface circuit 14, the power supply source circuit 12 generates a voltage, with the first ground G1 as the reference.

The power supply source circuit 13 is connected to the second ground G2, and generates a voltage (second voltage) from an output voltage of the external power supply source PS2, with the second ground G2 as the reference. The voltage that the power supply source circuit 13 generates is for example, 5[V]. The power supply source circuit 13 is connected to the second ground G2 so as to match an external device (omitted from drawings) that is not connected to the external power supply source PS1 and is only connected to the external power supply source PS2, and the ground. Either of power supply source circuits 12, 13 are for example, power circuits that generate a voltage from 12[V] to 5[V]. Thus, the power supply source circuits 12, 13 may be the same configuration, and may be different configurations depending on current capacity or the like.

The voltages generated at the power supply source circuits 11 to 13 are used as power supply voltages in each block provided in the control unit 1. In FIG. 1, to facilitate understanding, different voltages generated at the power supply source circuits 11 to 13 which are used in different power supplies are shown with different power supply symbols. Specifically, the voltage that is generated at the power supply source circuit 11 is a square symbol with a white background, the voltage that is generated at the power supply source circuit 12 is a circular symbol with a white background, and the voltage that is generated at the power supply source circuit 13 is a circular symbol with a black background.

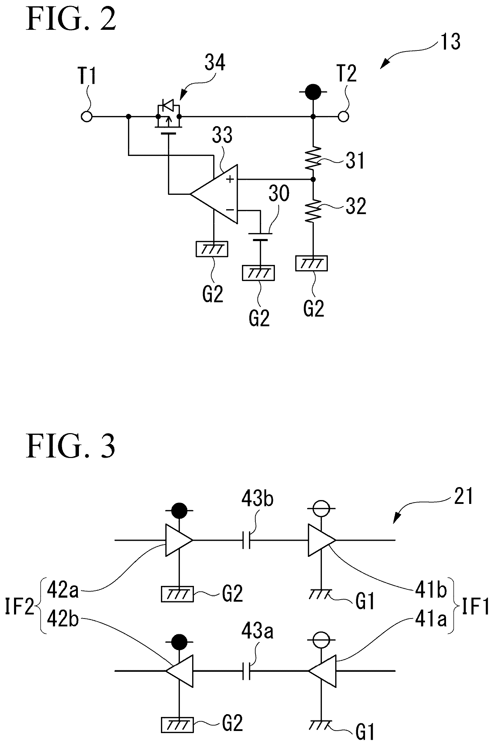

FIG. 2 is a schematic drawing that shows an example of an inner configuration of the power supply source circuit included in the electronic control device according to the first embodiment. The power supply source circuit 13 that the electronic control device includes is illustrated in FIG. 2. The power supply source circuit 13 illustrated in FIG. 2 includes a standard voltage 30, resistors 31, 32, a differential amplifier 33, and a MOSFET 34, and generates a voltage that is output from an output terminal T2 from a voltage that is input from an input terminal T1. The voltage input from the input terminal T1 is for example, 12[V]. The voltage output from the output terminal T2 is for example, 5[V]. The voltage output from the output terminal T2 is used as a power supply source voltage within an electronic control device 1.

The standard voltage 30 is a voltage that becomes a standard of the voltage output from the output terminal T2 of the power supply source circuit 13. A negative pole of the standard voltage 30 is connected to the second ground G2. The resistors 31, 32 are connected in series between the output terminal T2 and the second ground G2, and divide the voltage of the output terminal T2. The differential amplifier 33 outputs the voltage from the output terminal that corresponds to a difference between the voltage (the voltage divided by the resistors 31, 32) input to a positive input terminal, and the voltage (the standard voltage 30) input to a negative input terminal. A positive power supply source of the differential amplifier 33 is connected to the input terminal T1, and a negative power supply source is connected to the second ground G2. The MOSFET 34 is provided between the input terminal T1 and the output terminal T2, and a signal that is output from the output terminal of the differential amplifier 33 is input to a gate terminal. As such, the power supply source circuit 13 configures a standard voltage circuit, so that the voltage that is output from the output terminal T2 becomes a fixed voltage (for example, 5[V]).

The ignition interface circuit 14 is an interface circuit that inputs the ignition signal S1 into the power supply source circuit 12 and the CPU 17. When the ignition signal S1 is input, the power supply source circuit 12 and the CPU 17 start operating. After the power supply source circuit 12 starts to operate, the voltage that is generated at the power supply source circuit 12 is applied to the torque sensor interface circuit 15, the angle sensor 16, the CPU 17, the drive circuit 18, and the isolator circuit 21 as a power supply source voltage.

The torque sensor interface circuit 15 is an interface circuit to connect the torque sensor TS to the CPU 17. The torque sensor interface circuit 15 is connected to the first ground G1, and operates with the voltage that is generated at the power supply source circuit 12 as a power supply source voltage. The angle sensor 16 detects a rotational angle (location of a rotor) of a rotor of the motor M. The angle sensor 16 is connected to the first ground G1, and operates with the voltage that is generated at the power supply source circuit 12 as the power supply source voltage.

The CPU 17 outputs a control signal to control the drive circuit 18 based on detection results of the torque sensor TS, on detection results of a current flowing to the motor M, and on detection results from the angle sensor 16. As such, the CPU 17 conducts what is referred to as feedback control by using current. The CPU 17 control the CAN transmission circuit 20, and conducts transmission with a unit that is connected to the CAN bus B1 which is not shown on the drawings. The CPU 17 is connected to the first ground G1, and operates with the voltage that is generated at the power supply source circuit 12 as the power supply source voltage.

Under control of the CPU 17, the drive circuit 18 generates a drive signal to drive the motor drive 19, and detects a current flowing through the motor drive 19. The drive circuit 18 includes an FET drive circuit 18a and a motor current detection circuit 18b. The FET drive circuit 18a generates a drive signal to drive the motor drive 19 based on a control signal that is output from the CPU 17. The motor current detection circuit 18b detects the current flowing through the motor drive 19, and outputs the results to the CPU 17. The drive circuit 18 is connected to the first ground G1, and operates with the voltage that is generated at the power supply source circuit 11 and the voltage that is generated at the power supply source circuit 12 as the power supply source voltage.

The motor drive 19 drives the motor M based on the drive signal that is output from the drive circuit 18. The motor drive 19 includes for example, an inverter that converts direct current power provided from the external power supply source PS1 to alternating current power, and provides the converted alternating current power to the motor M. As the aforementioned inverter for example, an inverter that includes a pair of an upper arm switching element and a lower arm switching element that correspond to a U phase, a pair of an upper arm switching element and a lower arm switching element that correspond to a V phase, and a pair of an upper arm switching element and a lower arm switching element that correspond to a W phase may be used.

It is possible to use a MOSFET (Metal-Oxide-Semiconductor Field Effect Transistor) as an example of the upper arm switching element and the lower arm switching element mentioned above. Besides a MOSFET, a semiconductor switch such as an IGBT (Insulated Gate Bipolar Transistor), or a bipolar transistor or the like may be used.

Under control of the CPU 17, the CAN transmission circuit 20 conducts transmission with the unit that is not shown on the drawings and is connected to the CAN bus B1. The CAN transmission circuit 20 is connected to the second ground G2, and operates with the voltage that is generated at the power supply source circuit 13 as the power supply source voltage. The CAN transmission circuit 20 is connected to the second ground G2 so as to conduct transmission with a control unit that is not shown on the drawings and is connected to the external power supply source PS2.

The isolator circuit 21 is provided between the CPU 17 and the CAN transmission circuit 20, and electrically isolates the CPU 17 and the CAN transmission circuit 20. The isolator circuit 21 is provided to for example, to prevent an operation malfunction due to current intersection via the first ground G1 and the second ground G2, when a potential difference is generated between the first ground G1 and the second ground G2. The current intersection via the first ground G1 and the second ground G2 includes the current intersection from the CPU 17 to the CAN transmission circuit 20, and the current intersection from the CAN transmission circuit 20 to the CPU 17.

The isolator circuit 21 is connected to the first ground G1 and the second ground G2, and operates with the voltage that is generated at the power supply source circuit 12 and at the power supply source circuit 13 as the power supply source voltage. Specifically, the isolator circuit 21 includes a first interface circuit IF1 and a second interface circuit IF2 that are electrically isolated from one another (refer to FIG. 3 to FIG. 5).

The first interface circuit IF1 is the interface circuit that is connected to the CPU 17, and has the voltage that is generated at the power supply source circuit 12 applied while being connected to the first ground G1. The second interface circuit IF2 is the interface circuit that is connected to the CAN transmission circuit 20, and has the voltage that is generated at the power supply source circuit 13 applied while being connected to the second ground G2.

In other words, the CPU 17 that is connected to the first ground G1 and the first interface circuit IF1 that is connected to the first ground G1 are electrically connected. The CAN transmission circuit 20 that is connected to the second ground G2 and the second interface circuit IF2 that is connected to the second ground G2 are electrically connected. The first interface circuit IF1 that is connected to the first ground G1 and the second interface circuit IF2 that is connected to the second ground G2 are electrically isolated.

FIG. 3 is a schematic drawing that shows an example of a first configuration of an isolator circuit in the first embodiment. The isolator circuit 21 shown in FIG. 3 is a capacitor insulating circuit where the first interface circuit IF1 and the second interface circuit IF2 are combined using capacitors 43a, 43b (capacitive elements). In other words, it is possible to say that the isolator circuit 21 shown in FIG. 3 is what is referred to as a "digital isolator".

The first interface circuit IF1 includes a sending circuit 41a and a receiving circuit 41b. Both the sending circuit 41a and the receiving circuit 41b are connected to the first ground G1, and operate with the voltage that is generated at the power supply source circuit 12 as the power supply source voltage. The second interface circuit IF2 includes a sending circuit 42a and a receiving circuit 42b. Both the sending circuit 42a and the receiving circuit 42b are connecting to the second ground G2, and operate with the voltage that is generated at the power supply source circuit 13 as the power supply source voltage.

An output terminal of the sending circuit 41a provided in the first interface circuit IF1 and an input terminal of the receiving circuit 42b provided in the second interface circuit IF2 are combined using the capacitor 43a. An output terminal of the sending circuit 42a provided in the second interface circuit IF2 and an input terminal of the receiving circuit 41b provided in the first interface circuit IF1 are combined using the capacitor 43b. In such a configuration, the isolator circuit 21 is able to transmit a digital signal between the first interface circuit 1F1 and the second interface circuit IF2.

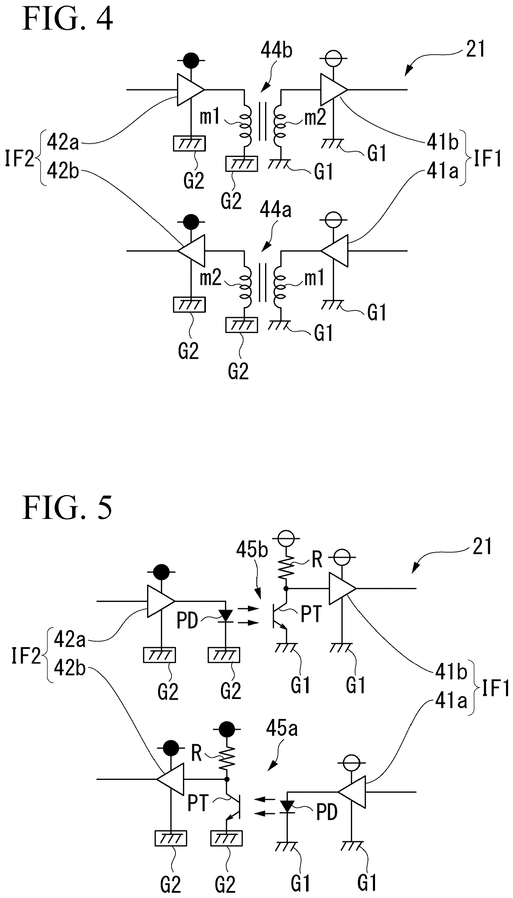

FIG. 4 is a schematic drawing that shows an example of a second configuration of an isolator circuit in the first embodiment. The isolator circuit 21 shown in FIG. 4 is a magnetic isolation type circuit where the first interface circuit IF1 and the second interface circuit IF2 are combined using transformers 44a, 44b (magnetic induction circuit). In other words, it is possible to say that the isolator circuit 21 shown in FIG. 4 is what is referred to as a "digital isolator".

The first interface circuit IF1 has the same configuration as the first interface circuit IF1 shown in FIG. 3. The second interface circuit IF2 has the same configuration as the second interface circuit IF2 shown in FIG. 3.

The output terminal of the sending circuit 41a provided in the first interface circuit IF1 is connected to one end of a primary winding m1 of the transformer 44a. The input terminal of the receiving circuit 42b provided in the second interface circuit IF2 is connected to one end of a secondary winding m2 of the transformer 44a. The other end of the primary winding m1 of the transformer 44a is connected to the first ground G1, and the other end of the secondary winding m2 is connected to the second ground G2.

The output end of the sending circuit 42a provided in the second interface circuit IF2 is connected to one end of the primary winding m1 of the transformer 44b. The input end of the receiving circuit 41b provided in the first interface circuit IF1 is connected to one end of the secondary winding m2 of the transformer 44b. The other end of the primary winding m1 of the transformer 44b is connected to the second ground G2, and the other end of the secondary winding m2 is connected to the first ground G1. In such a configuration, it is possible for the isolator circuit 21 to transmit a digital signal between the first interface circuit IF1 and the second interface circuit IF2.

FIG. 5 is a schematic drawing that shows an example of a third configuration of an isolator circuit in the first embodiment. The isolator circuit 21 shown in FIG. 5 is an optically isolated type circuit where the first interface circuit IF1 and the second interface circuit IF2 are combined using photo couplers 45a, 45b.

The first interface circuit IF1 has the same configuration as the first interface circuit IF1 shown in FIG. 3 and FIG. 4. The second interface circuit IF2 has the same configuration as the second interface circuit IF2 shown in FIG. 2 and FIG. 4.

The output terminal of the sending circuit 41a of the first interface circuit IF1 is connected to an anode of a photo diode PD that is provided in the photo coupler 45a. A cathode of the photo diode PD is connected to the first ground G1. The input terminal of the receiving circuit 42b provided in the second interface circuit IF2 is connected to a connection point of one end of a collector of a phototransistor PT provided in the photo coupler 45a and a resistor R. An emitter of the phototransistor PT having the voltage that is generated at the power supply source circuit 13 is connected to the second ground G2 at the other end of the resistor R.

The output terminal sending circuit 42a provided in the second interface circuit IF2 is connected to the anode of the photo diode PD provided in the photo coupler 45b. The cathode of the photo diode PD is connected to the second ground G2. The input terminal of the receiving circuit 41b provided in the first interface circuit IF1 is connected to the connection point of one end of a collector of a phototransistor PT provided in the photo coupler 45b and a resistor R. An emitter of the phototransistor PT having the voltage that is generated at the power supply source circuit 12 is connected to the first ground G1 at the other end of the resistor R. In such a configuration, it is possible for the isolator circuit 21 to transmit a digital signal between the first interface circuit IF1 and the second interface circuit IF2.

Next, an operation of the electric power steering device included in the control unit 1 in the configuration above is explained. For example, when the operator of the automotive vehicle operates the ignition key, the ignition signal S1 is input into the control unit 1 via the connector CN. The ignition signal S1 input into the control unit 1 is input into the power supply source circuit 12 and the CPU 17 via the ignition interface circuit 14.

A voltage (for example 5[V]) having the first ground G1 as the reference is generated from a voltage that is generated by the power supply source circuit 11 in the power supply source circuit 12. The voltage that is generated at the power supply source circuit 12 is applied to the torque sensor interface circuit 15, the angle sensor 16, the CPU 17, the drive circuit 18, and the isolator circuit 21. The voltage (for example 12[V]) generated at the power supply source circuit 11 is applied to the drive circuit 18, and the voltage (for example 5[V]) generated at the power supply source circuit 13 is applied to the CAN transmission circuit 20 and the isolator circuit 21. By having the ignition signal S1 be input into the CPU 17, the CPU 17 is in a state of operation.

The steering torque of the operator of the automotive vehicle is detected by the torque sensor TS. The detection results of the torque sensor TS are input into the CPU 17 via the torque sensor interface circuit 15. The angle sensor 16 detects the rotational angle (location of a rotor) of the rotor of the motor M. The current that flows through the motor drive 19 is detected by the motor current detection circuit 18b. Results of the angle sensor 16 and the motor current detection circuit 18b are input into the CPU 17.

A process where the control signal that is controlled by the drive circuit 18 is output based on the detection results of the torque sensor TS, the detection results of the angle sensor 16, and detection results of the motor current detection circuit 18b is conducted by the CPU 17. The control signal that is output from the CPU 17 is input into the drive circuit 18. A process of generating the drive signal to drive the motor drive 19 based on the control signal that is output from the CPU 17 is conducted in the FET drive circuit 18a of the drive circuit 18.

The drive signal generated at the FET drive circuit 18a is output to the motor drive 19. Driving of the motor M is conducted according to the drive signal generated at the FET drive circuit 18a in the motor drive 19. Accordingly, the steering assist torque is applied to the steering mechanism of the automotive vehicle or the like. As such, the current supplied to the motor M is controlled according to the steering torque that is detected at the torque sensor TS, and the steering assist torque that is applied to the steering mechanism of the automotive vehicle is controlled.

The CPU 17 conducts transmission with the unit that is not shown on the drawings and is connected to the CAN bus B1 by controlling the CAN transmission circuit 20 via the isolator circuit 21. Data sent (for the CPU 17) via the CAN bus B1 from the unit that is not shown on the drawings and is connected to the CAN bus B1, is received by the CAN transmission circuit 20, and is input to the CPU 17 via the isolator circuit 21. Data that is sent by the CPU 17 (data for the unit that is not shown on the drawings and is connected to the CAN bus B1) is output to the CAN transmission circuit 20 via isolator circuit 21 from the CPU 17. The data is sent to the unit that is not shown on the drawings and is connected to the CAN bus B1 from the CAN transmission circuit 20 via the CAN bus B1.

As explained in FIG. 3 to FIG. 5, the first interface circuit IF1 and the second interface circuit IF2 of the isolator circuit 21 are electrically isolated. As such, even if a potential difference is generated between the first ground G1 and the second ground G2, no operation malfunction due to current intersection via the first ground G1 and the second ground G2 occurs.

As in the above, the present embodiment includes the CPU 17 that is connected to the first ground G1 and operates with the voltage having the first ground G1 as the reference, the CAN transmission circuit 20 that is connected to the second ground G2 and operates with the voltage having the second ground G2 as the reference, and the isolator circuit 21 provided between the CPU 17 and the CAN transmission circuit 20.

The isolator circuit 21 includes the first interface circuit IF1 and the second interface circuit IF2 that are electrically isolated from one another. The first interface circuit IF1 is an interface circuit with respect to the CPU 17, is connected to the first ground G1, and operates with a voltage having the first ground G1 as the reference. The second interface circuit IF2 is an interface circuit with respect to the CAN transmission circuit 20, is connected to the second ground G2, and operates with a voltage having the second ground G2 as the reference.

Accordingly, in the present embodiment, the interval between the CPU 17 and the CAN transmission circuit 20 is isolated by the isolator circuit 21 which includes the first interface circuit IF1 and the second interface circuit IF2. As such, since a potential level shift circuit (high-voltage semiconductor integrated circuit) that is conventionally needed to isolate between circuits is not needed, it is possible to effectively isolate between the two operating external power supply sources PS1 and PS2 that are different, while achieving a smaller size and a lower cost.

### <Second Embodiment>

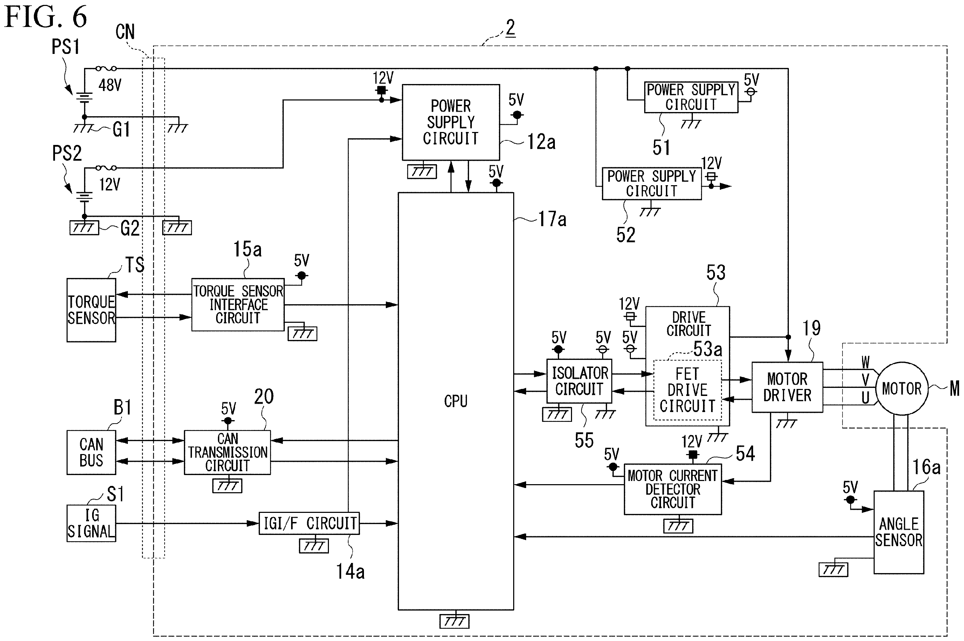

FIG. 6 is a block diagram that shows a main part configuration of an electronic control device according to a second embodiment of the present disclosure. In FIG. 6, the same blocks used in FIG. 1 have the same reference signs affixed thereto. As shown in FIG. 2, an electronic control device 2 according to the present embodiment includes a power supply source circuit 12a (second power supply source circuit), an ignition interface circuit 14a, a torque sensor interface circuit 15a, an angle sensor 16a, a CPU 17a (second circuit, control circuit), the motor drive 19, the CAN transmission circuit 20, a power supply source circuit 51 (first power supply source circuit), a power supply source circuit 52, a drive circuit 53 (first circuit, peripheral circuit), a motor current detection circuit 54, and an isolator circuit 55 (isolated circuit).

The power supply source circuit 12a is the same power supply source circuit as the power supply source circuit 12 shown in FIG. 1. The power supply source circuit 12a differs from the power supply source circuit 12 shown in FIG. 1 in an aspect of being connected to the second ground G2, and in generating a voltage from the output of the external power supply source PS2 with the second ground G2 as the reference. The voltage that the power supply source circuit 12a generates, for example 5[V], is similar to the voltage that the power supply source circuit 12 shown in FIG. 1 generates. The power supply source circuit 12a generates a voltage when the ignition signal S1 is input thereto, with the second ground G2 as the reference.

Each of the ignition interface circuit 14a, the torque sensor interface circuit 15a, the angle sensor 16a, and the CPU 17a are similar to the ignition interface circuit 14, the torque sensor interface circuit 15, the angle sensor 16, and the CPU 17 shown in FIG. 1. The ignition interface circuit 14a, the torque sensor interface circuit 15a, the angle sensor 16a, and the CPU 17a differ from the ignition interface circuit 14, the torque sensor interface circuit 15, the angle sensor 16, and the CPU 17 shown in FIG. 1 in an aspect of being connected to the second ground G2, and by operating using a voltage that is generated at the power supply source circuit 12a as a power supply voltage.

Each of the motor drive 19 and the CAN transmission circuit 20 are the same as the motor drive 19 and the CAN transmission circuit 20 shown in FIG. 1. The motor drive 19 drives the motor M based on the drive signal that is output from the drive circuit 53. The motor drive 19 for example, includes an inverter that converts the direct current power supplied from the external power supply source PS1 to an alternating current power supply, and supplies the converted alternating current power supply to the motor M. Detailed explanations pertaining to the inverter are omitted. Under control of the CPU 17a, the CAN transmission circuit 20 conducts transmission with the unit that is not shown on the drawings and is connected to the CAN bus B1. The CAN transmission circuit 20 is connected to the second ground G2, and operates the voltage generated at the second power supply source circuit 12a as the power supply source voltage. It is possible to directly connect the CAN transmission circuit 20 to the CPU 17a.

The power supply source circuit 51 is connected to the first ground G1, and generates a voltage from the output voltage of the external power supply source PS1, with the first ground G1 as the reference. The voltage that the power supply source circuit 11 generates for example is 5[V]. The power supply source circuit 51 is a power supply source circuit that is equivalent to the power supply source circuits 11, 12 shown in FIG. 1. The power supply source circuit 52 is connected to the first ground G1, and generates a voltage from the output voltage of the external power supply source PS1, with the first ground G1 as the reference. The voltage that the power supply source circuit 52 generates for example is 12[V].

In FIG. 6, to facilitate understanding, the output voltage of the external power supply source PS2, and the different voltages generated at the power supply source circuit 12a, the power supply source circuit 51, and the power supply source circuit 52 which are used as power supply source voltages are shown with different power supply symbols. Specifically, the external power supply source PS2 is a square symbol with a black background, the voltage that is generated at the power supply source circuit 12a is a circular symbol with a black background, the voltage that is generated at the power supply source circuit 51 is a circular symbol with a white background, and the voltage that is generated at the power supply source circuit 52 is a square symbol with a white background.

The drive circuit 53 includes an FET drive circuit 53a, and generates a drive signal to drive the motor drive 19 based on a control signal that is output from the CPU 17a. The drive circuit 53 is connected to the first ground G1, and operates the voltages generated at the power supply source circuits 51, 52 as the power supply source voltages. The motor current detection circuit 54 detects the current flowing through the motor drive 19, and outputs the detected results to the CPU 17a. The motor current detection circuit 54 is connected to the second ground G2, and operates with the output voltage of the external power supply source PS2 and the voltage that is generated at the power supply source circuit 12a as the power supply source voltage.

The drive circuit 18 shown in FIG. 1 included the FET drive circuit 18a and the motor current detection circuit 18b. Conversely, the drive circuit 53 shown in FIG. 6 only includes the FET drive circuit 53a, and the motor current detection circuit 54 is separated. The above is done to prevent worsening of detection accuracy of the motor current in the CPU 17a.

In other words, even if the motor current detection circuit 54 is provided within the drive circuit 53, since the CPU 17a and the drive circuit 53 are each connected to a different ground, the accuracy of the motor current detected at the CPU 17a worsens due to a voltage level difference between the grounds. To prevent such worsening in detection accuracy, the motor current detection circuit 54 is separated from the drive circuit 53, and is connected to the same ground as the ground the CPU 17a is connected to.

The isolator circuit 55 is provided between the CPU 17a and the drive circuit 53, and electrically isolates the CPU 17a and the drive circuit 53 from one another. The isolator circuit 55 is provided for the same reason that the isolator circuit 21 shown in FIG. 1 is provided. As with the isolator circuit 21 shown in FIG. 1, the isolator circuit 55 is connected to the first ground G1 and the second ground G2, and operates with the voltage that is generated at the power supply source circuit 12 and the power supply source circuit 13 as the power supply source voltage. As with the isolator circuit 21 shown in FIG. 1, the isolator circuit 55 includes the first interface circuit IF1 and the second interface circuit IF2 that are electrically isolated from one another (FIG. 3 to FIG. 5).

The first interface circuit IF1 of first interface circuit 1F1 is connected to the drive circuit 53, and the second interface circuit IF2 of the isolator circuit 55 is connected to the CPU 17a. In other words, the first interface circuit IF1 that is connected to the first ground G1 and has the voltage that is generated at the power supply source circuit 51 applied is connected to the drive circuit 53. Conversely, the second interface circuit IF2 that is connected to the second ground G2 and has the voltage that is generated at the power supply source circuit 12a applied is connected to the CPU 17a.

Next, operation of an electric power steering device included in the electronic control device 2 in the above configuration is explained. For example, when a vehicle operator operates an ignition key, the ignition signal S1 is input into the electronic control device 2 via the connector CN. The ignition signal S1 input into the electronic control device 2 is input into the power supply source circuit 12a and the CPU 17a via the ignition interface circuit 14a.

As such, at the power supply source circuit 12a, a voltage (for example, 5[V]) is generated from the output voltage of the external power supply source PS2 with the second ground G2 as the reference. The voltage that is generated at the power supply source circuit 12a is applied to the torque sensor interface circuit 15a, the angle sensor 16a, the CPU 17a, the CAN transmission circuit 20, the motor current detection circuit 54, and the isolator circuit 55. The output voltage (for example, 12[V]) of the external power supply source PS2 is applied to the motor current detection circuit 54, and the voltage (for example, 5[V]) generated at the power supply source circuit 51 is applied to the drive circuit 53, and the voltage (for example, 12[V]) generated at the power supply source circuit 52 is applied to the drive circuit 53. The CPU 17a operates by having the ignition signal S1 input into the CPU 17a.

Steering torque of the vehicle operator is detected by the torque sensor TS. The detection results of the torque sensor TS are input into the CPU 17a via the torque sensor interface circuit 15a. The angle sensor 16a detects the rotational angle (location of a rotor) of the rotor of the motor M. The current that flows through the motor drive 19 is detected by the motor current detection circuit 54. The detection results of the angle sensor 16a and the motor current detection circuit 54 are input into the CPU 17a.

A process where the control signal that is controlled by the drive circuit 53 is output based on the detection results of the torque sensor TS, the detection results of the angle sensor 16a, and the detection results of the motor current detection circuit 54 is conducted by the CPU 17a. The control signal that is output from the CPU 17a is input into the drive circuit 53 via the isolator circuit 55.

The first interface circuit IF1 and the second interface circuit IF2 of the isolator circuit 55 are electrically isolated. As such, even if a potential difference is generated between the first ground G1 and the second ground G2, no operation malfunction due to current intersection via the first ground G1 and the second ground G2 occurs.

A process of generating the drive signal to drive the motor drive 19 based on the control signal that is output from the CPU 17a at the FET drive circuit 53a of the drive circuit 53 is conducted when the control signal that is output from the CPU 17a is input into the FET drive circuit 53a of the drive circuit 53. The drive signal that is generated at the FET drive circuit 53a is output to the motor drive 19. Driving of the motor M according to the drive signal that is generated at the FET drive circuit 53a is conducted in the motor drive 19. Accordingly, a steering assist force is applied to the steering mechanism of an automotive vehicle or the like. Thus, according to the steering torque detected by the torque sensor TS, the current that is supplied to the motor M is controlled, and the steering assist force being applied to the steering mechanism of an automotive vehicle is controlled.

The CPU 17a conducts transmission with the unit that is not shown on the drawings and is connected to the CAN bus B1 by controlling the CAN transmission circuit 20. Data sent (for the CPU 17a) via the CAN bus B1 from the unit that is not shown on the drawings and is connected to the CAN bus B1, is received by the CAN transmission circuit 20, and is input to the CPU 17a. Data that is sent by the CPU 17a (data for the unit that is not shown on the drawings and is connected to the CAN bus B1) is output to the CAN transmission circuit 20 from the CPU 17a. The data is sent to the unit that is not shown on the drawings and is connected to the CAN bus B1 from the CAN transmission circuit 20 via the CAN bus B1.

As mentioned above, the present embodiment includes the CPU 17a that is connected to the second ground G2 and that operates by a voltage having the second ground G2 as the reference, the drive circuit 53 that is connected to the first ground G1 and that operates by a voltage having the first ground G1 as the reference, and the isolator circuit 55 that is provided between the CPU 17a and the drive circuit 53.

The isolator circuit 55 includes the first interface circuit IF1 and the second interface circuit IF2 that are electrically isolated from one another. The first interface circuit IF1 is an interface circuit with respect to the drive circuit 53, is connected to the first ground G1, and operates with a voltage having the first ground G1 as the reference. The second interface circuit IF2 is an interface circuit with respect to the CPU 17a, is connected to the second ground G2, and operates with a voltage having the second ground G2 as the reference.

Accordingly, in the present embodiment, the interval between the CPU 17a and the drive circuit 53 is isolated by the isolator circuit 55 which includes the first interface circuit IF1 and the second interface circuit IF2. As such, since a potential level shift circuit (high-voltage semiconductor integrated circuit) that is conventionally needed to isolate between circuits is not needed, it is possible to effectively isolate between the two operating external power supply sources PS1 and PS2 that are different, while achieving a smaller size and a lower cost.

Although the first and the second embodiments of the present disclosure are explained, the present disclosure is not limited to the embodiments above, and it is possible to make changes so long as the changes are within the technical scope of the present disclosure. For example, an example where the output voltage of the external power supply source PS1 48[V], and the output voltage of the external power supply source PS2 is 12[V] is explained in the aforementioned first and second embodiments. However, the output voltages of the external power supply sources PS1 and PS2 are not limited to 48[V] and 12[V]. For example, the output voltage of the external power supply source PS1 may be higher than the output voltage of the external power supply source PS2.

An example where the CAN transmission circuit 20 and the isolator circuit 21 are different circuits is explained in the first embodiment mentioned above. However, the CAN transmission circuit 20 and the isolator circuit 21 may be the same circuit. In the first and second embodiments mentioned above, an example where the electronic control devices 1 and 2 include the CAN transmission circuit 20, and conduct transmission via the CAN bus B1 is explained. However, other than CAN transmission, the transmission that the electronic control devices 1 and 2 conduct may be some other transmission such as Flex-ray transmission or the like.

In the first embodiment mentioned above, an example where the isolator circuit 21 is provided between the CPU 17 and the CAN transmission circuit 20 is explained. However, a configuration where the isolator circuit 21 is provided between the CPU 17 and the torque sensor interface circuit 15 is possible. In the case of such a configuration, the torque sensor interface circuit 15 is connected to the second ground G2, and the voltage that is generated at the power supply source circuit 13 is applied. The first interface circuit IF1 of the isolator circuit 21 is connected to the CPU 17, and the second interface circuit IF2 is connected to the torque sensor interface circuit 15.

Each embodiment of the electronic control devices 1, 2 and the electric power steering device mentioned above internally includes a computer system. A program that realizes functions of each of the configurations included in the electronic control devices 1, 2 and the electric power steering device may be recorded on a readable recording medium, and the program recorded on the readable recording medium may be loaded onto a computer that executes the program to conduct processing of the various embodiments of the electronic control devices 1, 2 and the electric power steering device. What is referred to here as the "program recorded on the readable recording medium may be loaded onto a computer that executes the program" includes installing a program on a computer system. What is referred to here as a "computer system" includes an OS and hardware of any peripheral devices or the like.

The "computer system" may include a plurality of computer devices connected via a network that includes a telecommunication line of an internet, a WAN, a LAN, a leased line or the like. The "recording media...loaded onto the computer system" is used to refer to a portable medium recording device such as a flexible disk, a magneto-optical disk, a ROM, a CD-ROM or the like, and/or a recording device built into the computer system such as a hard disk or the like. As such, the recording device onto which the programs is recorded may be a non-transient recording device such as a CD-ROM or the like.

A recording device that is provided internally or externally, and that may be accessed from a distribution server for distributing the aforementioned program may be included. The program may be a configuration where the program is divided, and combined at the various configurations included in the electronic control devices 1, 2 and the electric power steering device, after being downloaded at timings that differ from one another. The distribution servers that distribute each of the divided program may also differ. The "recording media...loaded onto the computer system" may be a server where the program is transmitted via a network, or a recording media that records the program for a certain period of time such as a volatile memory (RAM) of a built-in computer system which is a client computer. The program may also be a program to realize a part of the aforementioned functions. The program may also be a program that combines with a program already recorded on the computer system to realize the aforementioned functions, in other words, a delta file (delta encoding).

### [Reference Sign List]

1, 2...Control Unit, 11, 12, 12a, 13... Power Supply Source Circuit, 15, 15a...Torque Sensor Interface Circuit, 17, 17a...CPU, 20...Can Transmission Signal Circuit, 21...Isolator Circuit, 43a, 43b... Capacitor, 44a, 44b...Transformer, 45a, 45b...Photo Coupler, 51...Power Supply Source Circuit, 53... Drive Circuit, 55...Isolator Circuit, G1...First Ground, G2...Second Ground, IF1...First Interface Circuit, IF2...Second Interface Circuit, M...Motor, PS1, PS2...External Power Supply Source, TS...Torque Sensor

## Claims

1. An electronic control device that uses a first external power supply source which is connected to a first ground, and uses a second external power supply source which is connected to a second ground, the electronic control device comprises:
a first power supply source circuit that is connected to the first ground, and that generates a first voltage from an output voltage of the first external power supply source with the first ground as a reference;
a second power supply source circuit that is connected to the second ground and that generates a second voltage from an output voltage of the second external power supply source with the second ground as a reference;
a first circuit that is connected to the first ground, and into which the first voltage is input;
a second circuit that is connected to the second ground, and into which the second voltage is input, and
an isolator circuit that is provided between the first circuit and the second circuit,
wherein
the isolator circuit has a:
a first interface circuit that has the first voltage input thereto while being connected to the first ground, and is connected to the first circuit, and
a second interface circuit that has the second voltage input thereto while being connected to the second ground, is connected to the second circuit, and is electrically isolated from the first interface circuit.

2. The electronic control device according to claim 1, wherein:
one of the first circuit or the second circuit is a control circuit, and
the other of the first circuit or the second circuit is a peripheral circuit of the control circuit.

3. The electronic control device according to claim 2, wherein:
the first circuit is the control circuit;
the second circuit is the peripheral circuit, and
the peripheral circuit is a transmission circuit that transmits to an external device.

4. The electronic control device according to claim 2, wherein:
the first circuit is the peripheral circuit;
the second circuit is the control circuit, and
the peripheral circuit is a drive circuit that drives an actuator based on a control signal that is output from the control circuit.

5. The electronic control device according to claim 2, wherein:
the first circuit is the control circuit;
the second circuit is the peripheral circuit, and
the peripheral circuit is a sensor signal interface circuit that is connected to an external sensor.

6. The electronic control device according to any one of claims 1 to 5, wherein:
the isolator circuit is a capacitor insulating circuit where the first interface circuit and the second interface circuit are combined using a capacitive element.

7. The electronic control device according to any one of claims 1 to 5, wherein:
the isolator circuit is a magnetic isolation type circuit where the first interface circuit and the second interface circuit are combined using a magnetic induction circuit.

8. The electronic control device according to any one of claims 1 to 5, wherein:
the isolator circuit is an optically isolated type circuit where the first interface circuit and the second interface circuit are combined using a photo coupler.

9. The electronic control device according to any one of claims 1 to 8, wherein:
the isolator circuit transmits a digital signal between the first interface circuit and the second interface circuit.

10. The electronic control device according to any one of claims 1 to 9, wherein:
the first external power supply source is a power supply source where an output voltage exceeds 12V;
the second external power supply source where an output voltage is a 12V system, and
each of the first power supply source circuit and the second power supply source circuit generates a 5[V] standard voltage as the first voltage and as the second voltage respectively.

11. The electronic control device according to claim 3, wherein:
the external device is connected to the second external power supply source, and
the transmission circuit and the external device are connected to the second ground.

12. The electronic control device according to claim 5, wherein:
the external sensor is connected to the second external power supply source, and
the sensor signal interface circuit and the external sensor are connected to the second ground.

13. The electronic control device according to claim 4, wherein:
the drive circuit is a motor drive that drives a motor, and
the first external power supply source is used as a power supply source for the motor drive.

14. An electric power steering device comprising:
a torque sensor that detects a steering torque of steering;
a motor that generates steering assist torque with respect to the steering, and
the electronic control device according to any one of claims 1 to 13 that controls a drive of the motor according to the steering torque detected by the torque sensor.
